# EUROPÄISCHE PATENTSCHRIFT

(11) **EP 0 717 689 B1**
(45) Veröffentlichungstag und Bekanntmachung des Hinweises auf die Patenterteilung: **01.04.1998**
(21) Anmeldenummer: 94927546.5
(22) Anmeldetag: 02.09.1994
(51) Int. Cl.: B60T 8/36

(54) **ELEKTROHYDRAULISCHE DRUCKREGELVORRICHTUNG**
ELECTROHYDRAULIC PRESSURE-CONTROL DEVICE
REGULATEUR DE PRESSION ELECTRO-HYDRAULIQUE

(30) Priorität: 11.09.1993 DE 4330827
(43) Veröffentlichungstag der Anmeldung: 26.06.1996
(73) Patentinhaber: ITT Automotive Europe GmbH, 60488 Frankfurt am Main (DE)
(72) Erfinder: HINZ, Axel, D-61267 Neu-Anspach (DE)
(86) Internationale Anmeldenummer: EP9402925
(87) Internationale Veröffentlichungsnummer: WO9507201

(56) Entgegenhaltungen:
- EP-A- 0 499 670
- WO-A-92/08630
- WO-A-92/12878
- DE-A- 4 141 546
- GB-A- 686 658
- GB-A- 2 156 158
- US-A- 3 403 884

## Beschreibung

Die Erfindung betrifft eine elektrohydraulische Druckregelvorrichtung, insbesondere Bremsdruckregelvorrichtung nach dem Oberbegriff des Anspruchs 1.

Eine elektrohydraulische Druckregelvorrichtung der gattungsbildenden Art wird beispielhaft in der internationalen Veröffentlichung WO 92/12878 beschrieben, wonach über die bereits hinreichend bekannte Blockbauweise des Ventilaufnahmekörpers hinaus der Deckel mittels eines plattenförmigen Trägerelementes unterteilt ist, um einerseits einen elektronischen Regler oder Teile eines elektronischen Reglers aufzunehmen, andererseits die elektrische Verbindung zwischen dem elektronischen Regler und den an den Elektromagnetventilen überstehenden Kontaktelementen herzustellen. Der Deckel ist mit den Spulen der Elektromagnetventile auf die Ventildome des Ventilaufnahmekörpers aufgesteckt, wobei zur Herstellung des elektrischen Anschlusses zwischen den Kontaktelementen und den im Deckel integrierten elektronischen bzw. elektrischen Komponenten Steckkontakte ineinander greifen. Zur Befestigung der Spulen am Trägerelement wird vorgeschlagen, elastische Halterungen, beispielsweise Federn zu verwenden oder die Spulen in einem elastischen Formkörper einzubetten. Die elastischen Halterungen und Formkörper gestalten sich hierbei hinsichtlich ihrer Auslegung und Anordnung an den Spulen als komplex.

Es ist die Aufgabe der Erfindung, die aus dem genannten Stand der Technik bekannte Druckregelvorrichtung zu verbessern, um eine einfache Spulenpositionierung, eine kompakt- sowie funktionsoptimierte Anordnung der Spulen gegenüber dem Trägerelement zu schaffen, die möglichst einfach herzustellen und zu prüfen ist, wobei unterschiedliche Wärmedehnungen der Bauteile sowie Bauteiltoleranzen möglichst spannungsfrei aufgenommen werden sollen.

Die gestellte Aufgabe wird ordnungsgemäß durch die kennzeichnenden Merkmale des Patentanspruchs 1 gelöst.

Weitere Merkmale, Vorteile und Anwendungsmöglichkeiten gehen aus der folgenden Darstellung mehrerer Ausführungsbeispiele hervor.

Es zeigen:
- Figur 1: einen Teilschnitt durch eine Druckregelvorrichtung mit den Merkmalen zur Erfindung,
- Figur 2: eine alternative Ausbildung der Anschlagmittel, der Hülsen sowie der Spulenummantelung für eine Druckregelvorrichtung,
- Figur 3: eine spezielle Verankerung sowie die Anschlagflächen für die Spulen im Formkörper.

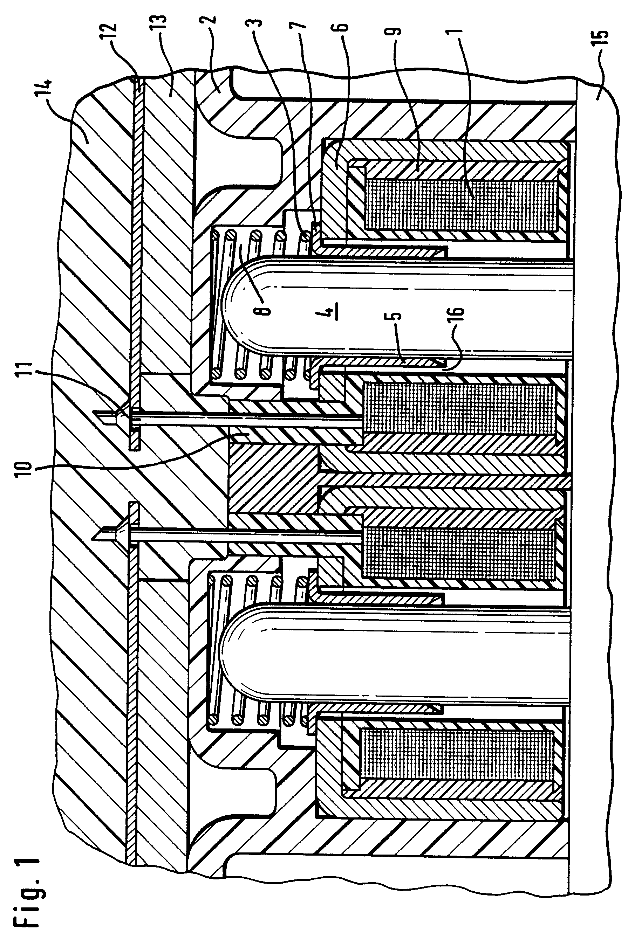

Die Figur 1 zeigt abschnittsweise einen Querschnitt durch eine erste Ausführungsform der erfindungsgemäßen Druckregelvorrichtung. Die Druckregelvorrichtung weist einen blockförmigen Ventilaufnahmekörper 15 auf, an dem auf der Oberseite mehrere nebeneinander parallel angeordnete Ventildome 4 überstehen, die die Spulen 1 der elektromagnetischen Einlaß- und Auslaßventile einer schlupfgeregelten Bremsanlage und die den Spulen 1 zugehörigen Spulenummantelungen 6 und Hülsen 5 aufnehmen. Die Hülsen 5 übernehmen die Funktion der Jochringe, wozu die Hülsen 5 jeweils an der Mantelfläche jedes Ventildoms 4 und der Spulenummantelung 6 anliegen. Dies geschieht mittels den als Anschlagmittel 3 wirksamen Druckfedern, die in den Hohlräumen 8 des über die Elektromagnetventile übergestülpten und am Ventilaufnahmekörper 15 befestigten Formkörper 2 eingefügt sind. Der Formkörper 2 nimmt gleichfalls die Spulen 1 an ihren Spulenummantelungen 6 spielfrei auf, so daß eine Überbrückung von Bauteiltoleranzen zwischen den Ventildomen 4 und den Hülsen 5 jeweils über einen Ringspalt 16 zwischen der topfförmigen Spulenummantelung 6 und der Hülse 5 gewährleistet ist. Durch die im Hohlraum 8 oberhalb jedes Ventildoms 4 befindliche Druckfeder ist einerseits eine Kontaktierung des an der Hülse 5 angeformten Bundes 7 mit der Spulenummantelung 6 möglich, andererseits erlaubt die Druckfeder eine nachgiebige Abstützung in Richtung der Ventildomachse, so daß auch Bauteiltoleranzen in Richtung der Ventildomachse zwischen den Spulen 1 und dem Formkörper 2 überbrückt werden können. Der Isolierstoff 9 der Spulen 1 bildet mit der Spulenummantelung 6 eine feste Verbindung, die ebenso wie die jeweils zugehörigen Hülse 5 aus Stahl gefertigt ist. Aus dem Isolierstoff 9 heraus erstrecken sich am Fortsatz 10 jeweils die den Spulen 1 zugehörigen Kontaktelemente 11, die vorzugsweise über Lötstützpunkte mit den Leiterbahnen 12 verbunden sind. Die Leiterbahnen 12 sind vorzugsweise auf einer Platine angeordnet, die sich auf einem plattenförmigen Trägerelement 13 abstützt. Das Trägerelement ist vorzugsweise aus Leichtmetall gefertigt und von einer als Abdeckungseinheit 14 wirksamen Vergußmasse bis hin zum Formkörper 2 umschlossen. Der Formkörper 2 ist als Kunststoffspritzgußteil ausgeführt und nimmt auf seiner Oberseite das Trägerelement 13 auf. Ein Durchbruch im Trägerelement 13 ermöglicht die ungehinderte Zuführung der Kontaktelemente 11 an die Leiterbahnen 12, wobei dieser gleichfalls von der Vergußmasse ausgefüllt ist.

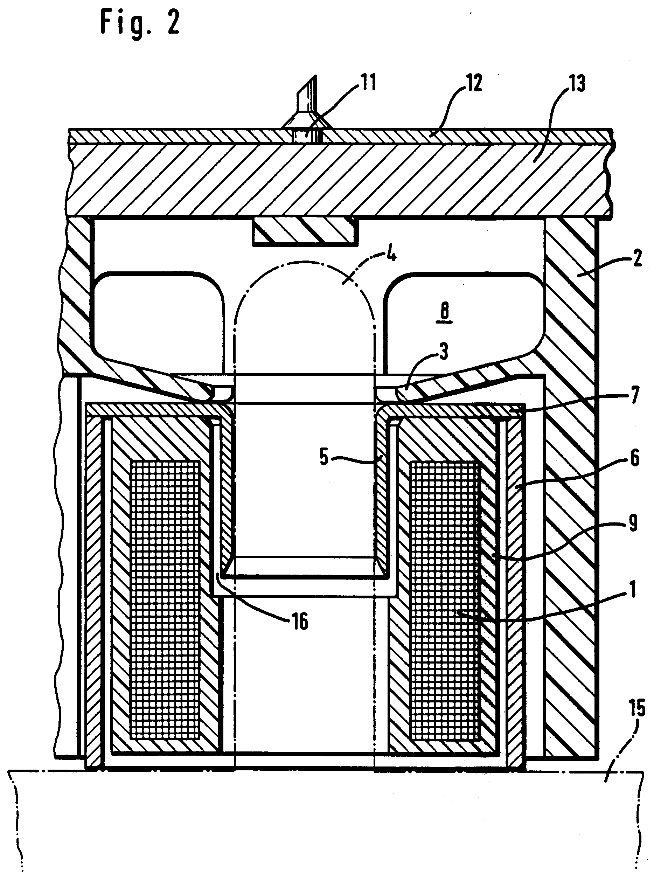

Die Figur 2 zeigt abweichend von Figur 1 eine spezielle Ausgestaltung der Anschlagmittel 3 mit einer veränderten Kontaktierung der Hülsen 5 mit der Spulenummantelung 6, wonach die Anschlagmittel 3 als Federzungen ausgeführt sind, die als homogenes Bestandteil des Formkörpers 2 sich symmetrisch verteilt in den Hohlraum 8 erstrecken und am Bund 7 der Hülse 5 anliegen. Der Bund 7 reicht nunmehr bis über den Außendurchmesser der Spule 1, so daß sich diese über die rohrförmige Spulenummantelung 6 erstreckt und diese kontaktiert. Um eine ausreichende Anpresskraft zwischen der Hülse 5 und der Spulenummantelung 6 wirksam werden zu lassen sowie zum Ausgleich von vertikalen Bauteiltoleranzen, ist die Höhe der Spulenummantelung 6 geringfügig größer gewählt als die Höhe der Spule 1, so daß beim Aufsetzen der Spulenummantelung 6 auf den Ventilaufnahmekörper 15, diese gemeinsam mit der Hülse 5 gegen die Federzunge bewegt werden. Sowohl die Spulenummantelung 6 wie auch die Hülse 5 weisen zum Ausgleich von Bauteiltoleranzen gegenüber der Spule 1 ein Radialspiel auf, wodurch sich diese Teile spannungsfrei am Ventildom 4 anordnen lassen. Die grundlegende Anordnung sowie Ausführung des Formkörpers 2 mit dem Trägerelement 13 und den Leiterbahnen 12 auf dem Ventilaufnahmekörper 15 entspricht der zur Figur 1 dargestellten Beschreibung, so daß der in Figur 2 niedergelegte Sachverhalt ausschließlich auf die Unterschiede zur Ausführungsform der Erfindung gerichtet ist.

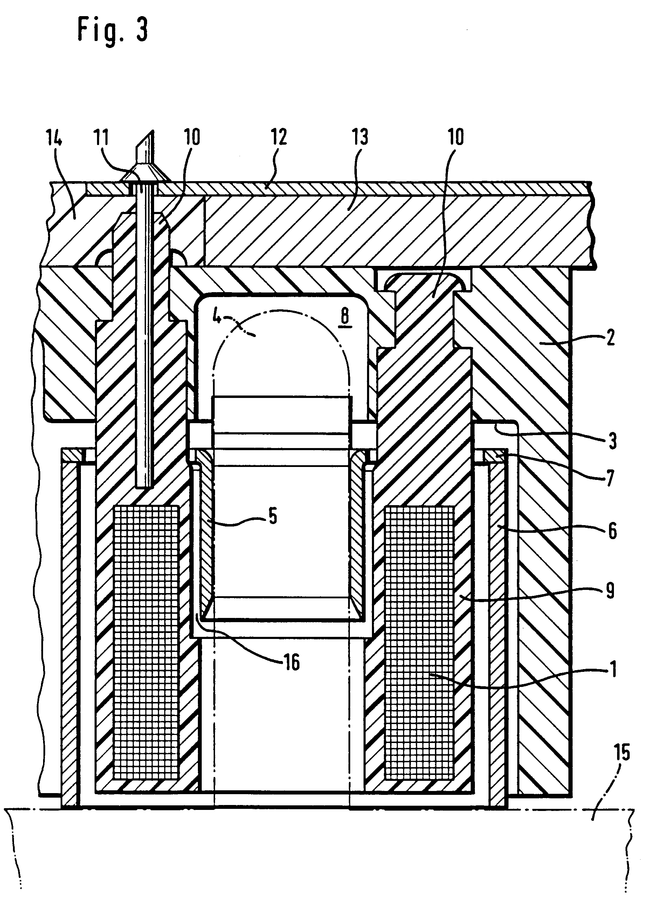

Die Figur 3 zeigt eine weitere alternative Ausführungsform des Erfindungsgedankens, exemplarisch beschrieben anhand einer Ventilanordnung für eine Druckregelvorrichtung. Im Gegensatz zu den in Figur 1 und 2 beschriebenen Konstruktionen dient der Fortsatz 10 einerseits als Verankerung der Spule 1 im Formkörper 2, andererseits erstreckt sich der weitere das Kontaktelement 11 beinhaltende Fortsatz 10 bis in den Bereich der das Trägerelement 13 und die Leiterbahnen 12 umschließenden Vergußmasse, die für die Funktion der Abdeckungseinheit 14 geeignet ist. Die Hülse 5 weist im Bund 7 zur Hindurchführung der beiden Fortsätze 10 entsprechend großzügige, spielbehaftete Öffnungen auf. Die Kontaktierung zwischen der Hülse 5 und der Spulenummantelung 6 geschieht auf gleichartige Weise wie in Figur 2 erläutert, jedoch mit dem Unterschied, daß als Anschlagmittel 3 die den Hohlraum 8 des Formkörpers 2 begrenzende Stirnfläche wirksam ist.

Zusammenfassend läßt sich feststellen, daß durch die Erfindung nur einfache Fixiermittel für die Ausrichtung der Spulen benötigt werden. Aufwendiges (großvolumiges) Umspritzen bzw. Umgießen der Spule 1 zur Herstellung eines elastischen Formkörpers entfällt. Reinigungs- und Entformungsprobleme werden vermieden. Die Hülse 5 bildet mit der Spulenummantelung 6 eine einfache herzustellende Einheit. Es können einfach herzustellende Hülsen 5 und Spulenummantelungen 6 aus Strangmaterial verwendet werden, ohne daß Erfordernis enge Fertigungstoleranzen einhalten zu müssen. Auf verblüffend einfache Weise ist jederzeit eine von Bauteiltoleranzen unabhängige Anordnung der Spulen 1 an den Ventildomen 4 erreicht und der Magnetkreis geschlossen. Der horizontale und vertikale Abstand der Spulen 1 gegenüber den Ventildomen 4 kann großzügig bemessen werden, was den Montagevorgang der elektrischen Baugruppe auf den Ventilaufnahmekörper 15 erheblich erleichtert.

### Bezugszeichenliste

- 1: Spule
- 2: Formkörper
- 3: Anschlagmittel
- 4: Ventildom
- 5: Hülse
- 6: Spulenummantelung
- 7: Bund
- 8: Hohlraum
- 9: Isolierstoff
- 10: Fortsatz
- 11: Kontaktelement
- 12: Leiterbahn
- 13: Trägerelement
- 14: Vergußmasse (Abdeckungseinheit)
- 15: Ventilaufnahmekörper
- 16: Ringspalt

## Patentansprüche

1. Elektrohydraulische Druckregelvorrichtung, insbesondere Bremsdruckregelvorrichtung, wie Antiblockierregelvorrichtung, Antriebsschlupfregelvorrichtung, mit elektromagnetisch betätigbaren Hydraulikventilen, die an einem Ventilaufnahmekörper (15) angeordnet sind, mit Spulen (1), die an ihren den Ventilaufnahmekörper (15) überragenden Teilen mit elektrischen Kontaktelementen (11) versehen sind, mit einer den Magnetfluß leitenden Spulenummantelung (6), mit einer Abdeckungseinheit (14), die die überragenden Spulenteile und die Kontaktelemente (11) abdeckt, mit einem Trägerelement (13) zur Verbindung mit den Spulen (1), das innerhalb der Abdeckungseinheit (14) angeordnet ist, wobei die Abdeckungseinheit (14) oder ein Teil der Abdeckungseinheit (14) für die Aufnahme eines elektronischen Reglers oder für die Aufnahme von Anschlußteilen für einen elektronischen Regler geeignet ist, wobei die Spulen (1) innerhalb eines Formkörpers (2) angeordnet sind, dadurch **gekennzeichnet**, daß der Formkörper (2) Anschlagmittel (3) aufweist, und daß jedes Anschlagmittel (3) eine an einem Ventildom (4) anliegende Hülse (5) kontaktiert, wobei jede den Magnetfluß leitende Hülse (5) auf der den Magnetfluß leitenden Spulenummantelung (6) anliegt.

2. Elektrohydraulische Druckregelvorrichtung nach Anspruch 1, dadurch **gekennzeichnet**, daß die Hülse (5) und die Spulenummantelung (6) relativ zueinander verschiebbar sind.

3. Elektrohydraulische Druckregelvorrichtung nach Anspruch 1 oder 2, dadurch **gekennzeichnet**, daß die Spule (1) gegenüber der Hülse (5) radial beabstandet ist.

4. Elektrohydraulische Druckregelvorrichtung nach einem der vorhergehenden Ansprüche, dadurch **gekennzeichnet**, daß die Hülse (5) einen Bund (7) aufweist, der an der Stirnfläche der Spulenummantelung (6) anlegbar ist.

5. Elektrohydraulische Druckregelvorrichtung nach mindestens einem der vorhergehenden Ansprüche 1 bis 4, dadurch **gekennzeichnet**, daß wenigstens einer der Anschlagmittel (3) aus einem Federelement gebildet ist, das in einem den Ventildom (4) aufnehmenden Hohlraum (8) des Formkörpers (2) geführt ist.

6. Elektrohydraulische Druckregelvorrichtung nach Anspruch 1, dadurch **gekennzeichnet**, daß jedes Anschlagmitttel (3) aus wenigstens einer Federzunge besteht, die ein homogenes Bestandteil des Formkörpers (2) bildet und die sich in einen den Ventildom (4) aufnehmenden Hohlraum (8) des Formkörpers (2) erstreckt.

7. Elektrohydraulische Druckregelvorrichtung nach Anspruch 1, dadurch **gekennzeichnet**, daß jedes Anschlagmittel (3) aus einem Ansatz einer Stirnfläche des Formkörpers (2) besteht, die einen den Ventildom (4) aufnehmenden Hohlraum (8) des Formkörpers (2) begrenzt und an der die Hülse (5) mit der Spulenummantelung (6) anliegt.

8. Elektrohydraulische Druckregelvorrichtung nach mindestens einem der vorhergehenden Ansprüche, dadurch **gekennzeichnet**, daß die Spule (1) von einem Isolierstoff (9) umschlossen ist, der wenigstens einen Fortsatz (10) aufweist, der im Formkörper (2) verankert ist.

9. Elektrohydraulische Druckregelvorrichtung nach Anspruch 8, dadurch **gekennzeichnet**, daß der Fortsatz (10) wenigstens ein Kontaktelement (11) der Spule (1) aufnimmt, das mit einer auf dem Formkörper (2) positionierten Leiterbahn (12) verbunden ist und die auf dem Trägerelement (13) gehalten ist.

10. Elektrohydraulische Druckregelvorrichtung nach Anspruch 9, dadurch **gekennzeichnet**, daß das Trägerelement (13) von einer Vergußmasse (14) umgeben ist, die sich bis in den Bereich von wenigstens einem Durchbruch des Trägerelementes (13) erstreckt, wobei der Durchbruch vom Formkörper (2), den Fortsätzen (10) und den daran angeschlossenen Kontaktelementen (11) begrenzt ist.

## Claims

1. Electrohydraulic pressure control device, in particular a braking pressure control device, such as an anti-lock control device, or a traction slip control device, including electromagnetically operable hydraulic valves which are mounted on a valve accommodating member (15), coils (1) having electric contact elements (11) on their parts which project from the valve accommodating member (15), a coil casing (6) conducting the magnetic flux, a cover unit (14) which covers the projecting coil parts and the contact elements (11), a carrier element (13) for connecting to the coils (1) that is arranged inside the cover unit (14), the cover unit (14) or part of the cover unit (14) being adapted for the accommodation of an electronic controller or for the accommodation of connecting elements for an electronic controller, and the coils (1) being arranged within a shaped part (2),
**characterized** in that the shaped part (2) includes stop means (3), and in that each stop means (3) contacts a sleeve (5) which is in abutment with a valve dome (4), each sleeve (5) conducting the magnetic flux abutting on the coil casing (6) which conducts the magnetic flux.

2. Electrohydraulic pressure control device as claimed in claim 1,
**characterized** in that the sleeve (5) and the coil casing (6) are movable in relation to each other.

3. Electrohydraulic pressure control device as claimed in claim 1 or claim 2,
**characterized** in that the coil (1) is spaced radially from the sleeve (5).

4. Electrohydraulic pressure control device as claimed in any one of the preceding claims,
**characterized** in that the sleeve (5) has a bead (7) which is movable into abutment with the end surface of the coil casing (6).

5. Electrohydraulic pressure control device as claimed in at least one of the preceding claims 1 to 4,
**characterized** in that at least one of the stop means (3) is a spring element which is guided in a cavity (8) of the shaped part (2) in which the valve dome (4) is accommodated.

6. Electrohydraulic pressure control device as claimed in claim 1,
**characterized** in that each stop means (3) includes at least one resilient tab forming a homogeneous component part of the shaped part (2) and extending into the cavity (8) in the shaped part (2), the cavity accommodating the valve dome (4).

7. Electrohydraulic pressure control device as claimed in claim 1,
**characterized** in that each stop means (3) includes a step of an end surface of the shaped part (2), the end surface defining the cavity (8) of the shaped part (2) accommodating the valve dome (4), and the sleeve (5) with the coil casing (6) being in abutment with this end surface.

8. Electrohydraulic pressure control device as claimed in at least one of the preceding claims,
**characterized** in that the coil (1) is enclosed by an insulating material (9) having at least one extension (10) that is captivated in the shaped part (2).

9. Electrohydraulic pressure control device as claimed in claim 8,
**characterized** in that the extension (10) accommodates at least one contact element (11) of the coil (1) which is connected to a conducting path (12) that is positioned on the shaped part (2) and retained on the carrier element (13).

10. Electrohydraulic pressure control device as claimed in claim 9,
**characterized** in that the carrier element (13) is enclosed by a sealing compound (14) which extends until the area of at least one aperture in the carrier element (13), the aperture being defined by the shaped part (2), the extensions (10) and the connected contact elements (11).

## Revendications

1. Dispositif de régulation de pression électrohydraulique, notamment dispositif de régulation de pression de freinage, tel que dispositif de régulation antiblocage, dispositif de régulation du glissement de traction, comprenant des valves hydrauliques à actionnement électromagnétique, qui sont disposées sur un corps de logement de valves (15), des bobines (1), qui sont pourvues d'éléments de contact électrique (11) sur leurs parties faisant saillie hors du corps de logement de valves (15), une enveloppe de bobine (6) conduisant le flux magnétique, une unité de recouvrement (14), qui recouvre les parties de bobine en saillie et les éléments de contact (11), et un élément de support (13) qui sert à la liaison avec les bobines (1) et est disposé à l'intérieur de l'unité de recouvrement (14), l'unité de recouvrement (14) ou une partie de l'unité de recouvrement (14) étant apte à loger un régulateur électronique ou à loger des parties de raccordement prévues pour un régulateur électronique et les bobines (1) étant disposées à l'intérieur d'un corps moulé (2), caractérisé en ce que le corps moulé (2) comporte des moyens de butée (3) et chaque moyen de butée (3) est en contact avec un manchon (5) en appui sur un dôme de valve (4) et en ce que chaque manchon (5), conduisant le flux magnétique, est en appui sur l'enveloppe de bobine (6) conduisant le flux magnétique.

2. Dispositif électro-hydraulique de régulation de pression suivant la revendication 1, caractérisé en ce que le manchon (5) et l'enveloppe de bobine (6) sont déplaçables l'un par rapport l'autre.

3. Dispositif électro-hydraulique de régulation de pression suivant la revendication 1 ou 2, caractérisé en ce que la bobine (1) est espacée radialement du manchon (5).

4. Dispositif électro-hydraulique de régulation de pression suivant l'une des revendications précédentes, caractérisé en ce que le manchon (5) comporte une collerette (7) qui est applicable sur la surface frontale de l'enveloppe de bobine (6).

5. Dispositif électro-hydraulique de régulation de pression suivant au moins l'une des revendications précédentes 1 à 4, caractérisé en ce qu'au moins l'un des moyens de butée (3) est formé d'un élément élastique qui est guidé dans une cavité (8) du corps moulé (2) qui reçoit le dôme de valve (4).

6. Dispositif électro-hydraulique de régulation de pression suivant la revendication 1, caractérisé en ce que les moyens de butée (3) sont constitués d'au moins une languette élastique qui s'étend dans une cavité (8) du corps moulé recevant le dôme de valve (4) et qui forme une partie constitutive homogène du corps moulé (2).

7. Dispositif électro-hydraulique de régulation de pression suivant la revendication 1, caractérisé en ce que les moyens de butée (3) sont constitués d'un épaulement d'une surface frontale du corps moulé (2), ladite surface frontale délimitant une cavité (8) du corps moulé qui reçoit le dôme de valve (4) et le manchon (5) étant en appui avec l'enveloppe de bobine (6) sur cette surface frontale.

8. Dispositif électro-hydraulique de régulation de pression suivant au moins l'une des revendications précédentes, caractérisé en ce que la bobine (1) est entourée d'une matière isolante (9) qui comporte au moins une partie en saillie (10) qui est ancrée dans le corps moulé (2).

9. Dispositif électro-hydraulique de régulation de pression suivant la revendication 8, caractérisé en ce que la partie en saillie (10) reçoit un élément de contact (11) de la bobine (1) qui est relié à une piste conductrice (12) positionnée sur le corps moulé (2) et maintenue sur l'élément de support (13).

10. Dispositif électro-hydraulique de régulation de pression suivant la revendication 9, caractérisé en ce que l'élément de support (13) est entouré d'une masse coulée (14) qui s'étend jusque dans la zone d'au moins une ouverture traversante de l'élément de support (13), l'ouverture traversante étant délimitée par le corps moulé (2), les parties en saillie (10) et les éléments de contact (11) qui y sont raccordés.
